# EUROPEAN PATENT APPLICATION

(11) **EP 4 568 139 A1**
(43) Date of publication of application: **11.06.2025**
(21) Application number: 23213880.0
(22) Date of filing: 04.12.2023
(51) Int. Cl.: H04B 10/114, A45D 6/00, A46B 15/00

(54) **WIRELESS OPTICAL COMMUNICATION INTERFACE FOR PERSONAL CARE DEVICE AND ACCESSORY DEVICE**

(71) Applicant: Koninklijke Philips N.V., 5656 AG Eindhoven (NL)
(72) Inventor: BALTAZAR DOS SANTOS, Nuno Filipe, Eindhoven (NL); VAN ACHT, Victor Martinus Gerardus, Eindhoven (NL)
(74) Representative: Philips Intellectual Property & Standards

(57) **Abstract**

The present invention relates to personal care devices and accessory devices. In order to provide a reliable, secure, high bandwidth, and/or easy to setup communication channel between personal care device and the accessory device, a personal care device (100) is provided with at least one light-emitting element (112) configured to emit light, and a modulator (120) configured to modulate the light for wirelessly transmitting first data.

## Description

### FIELD OF THE INVENTION

The present invention relates to a personal care device and to an accessory device.

### BACKGROUND OF THE INVENTION

Personal care devices, such as oral cleaning devices, hair care devices, hair removal devices, and skin care devices, have proven to improve the effectiveness of cleaning sessions and are popular with many users. The personal care devices are often provided with one or more accessory devices, such as a charger stand, a cleaning stand, a docking station, a travel case, etc.

Some personal care devices may have become connected device with an every-increasing sensory data acquisition capability. Different sensors and sensing techniques are now becoming possible. The sensor data may need to be transferred to e.g., smart phones for local processing or uploaded to the cloud. Some personal care devices, such as electric toothbrushes, may have a Bluetooth module, e.g., a Bluetooth Low Energy (BLE) module, to enable the connectivity; however, it is not suitable for high data rates required for e.g., video streams or the services that require high data rates to be uploaded for processing. This is due to the fact that the BLE communication channel bandwidth is limited to save power. Furthermore, the BLE communication setup is not straight forward, and connection reliability is often an issue and a deterrent to users, which can lead to user disengagement and an overall poor and frustrating customer experience. The BLE communication also requires having a smart phone nearby, which in e.g., a bathroom environment, is not always desired by the user. In addition, although the personal care devices could integrate a Wi-Fi module, initial setting up of the Wi-Fi connection to the user's router may be difficult. Furthermore, implementing Wi-Fi is expensive, and has high power consumption.

### SUMMARY OF THE INVENTION

There may be a need for a reliable, secure, high bandwidth, and/or easy to setup communication channel between personal care device and the accessory device.

The object of the present invention is solved by the subject matter of the independent claims where further embodiments are incorporated in the dependent claims. It is understood that the following aspect of the invention equally applies to the personal care device and the accessory device.

According to a first aspect of the present invention, there is provided a personal care device. The portal personal care device comprises at least one light-emitting element configured to emit light, and a modulator configured to modulate the light for wirelessly transmitting first data.

Accordingly, the present disclosure proposes an optical communication interface between a personal care device and an accessory device. This functionality may enable to download data from personal care device (e.g., toothbrush handle, hair removal device, etc.) to the accessory device (e.g., charging stand, travel case, etc. ) , which can act as a gateway to the cloud. Depending on the embodiment, it is also possible to upload data from the accessory device to the personal care device, enabling at least some sorts of services to the user.

According to an exemplary embodiment of the first aspect of the present invention, the at least one light-emitting element comprises a plurality of light-emitting elements, at least two of which are configured to emit the light in different directions.

For example, the two or more light-emitting elements 12 may be arranged to emit the light in different directions, e.g., to achieve omnidirectionality.

According to an exemplary embodiment of the first aspect of the present invention, the personal care device further comprises a communication channel encoder configured to encode the first data.

For example, the channel encoding may introduce redundancy for the purpose of error detection and error correction on the receiving side.

According to an exemplary embodiment of the first aspect of the present invention, the personal care device further comprises one or more sensors configured to capture sensor data, image data, and/or video data. The first data comprises the captured sensor data, the captured image data, and/or the captured video data.

According to the example, the high-speed optical communication from the toothbrush handle to the recharge station and the conventional Bluetooth communication may be combined to set up the high-speed optical link. This would simplify the optical link design, e.g., optics, electronics, algorithms, and software.

According to an exemplary embodiment of the first aspect of the present invention, the personal care device further comprises at least one photodetector configured to detect light that is modulated for wirelessly transmitting second data, and a demodulator configured to extract the second data from the modulated light.

For example, the accessory device may send data towards the personal care device related to treatment intensity of the personal care device.

According to an exemplary embodiment of the first aspect of the present invention, the second data comprises configuration data for configuring the personal care device.

For example, dynamic brush profile adjustment (e.g., time and intensity for oral hygiene routine) may be transmitted from the recharge station to the toothbrush handle.

According to an exemplary embodiment of the first aspect of the present invention, the personal care device further comprises a Bluetooth transceiver configured to wirelessly transmit and receive third data.

Accordingly, a combination of high-speed optical communication from a personal care device to an accessory device, and conventional Bluetooth communication (BLE already exists in the toothbrush) for bi-directional communication and setting up the high-speed optical link. That would simplify the optical link (optics, electronics, algorithms, software) considerably.

According to an exemplary embodiment of the first aspect of the present invention, the third data comprises one or more of: sensor data captured by one or more sensors of the personal care device, and information related to a setup of a light communication channel between the personal care device and an accessory device.

For example, information related to pressure that is being applied by the user while brushing his/her teeth may be displayed. In such an example, the recharge station would also include a display for the user to see simple messages (as an alternative, the smart phone can also be used as a display as it currently already is used). Additionally, the Bluetooth can send information related to the setup of the light communication channel towards an accessory device.

According to an exemplary embodiment of the first aspect of the present invention, the personal care device comprises one or more of: an oral cleaning device, a hair care device, a hair removal device, and a skin care device.

According to a second aspect of the present invention, there is provided an accessory device for a personal care device. The accessory device comprises at least one photodetector configured to detect light that is modulated for wirelessly transmitting first data, and a demodulator configured to extract the first data from the modulated light.

According to an exemplary embodiment of the second aspect of the present invention, the at least one photodetector comprises a plurality of photodetectors, at least two of which are configured to detect light from different directions.

According to an exemplary embodiment of the second aspect of the present invention, the accessory device further comprises at least one light-emitting element configured to emit light, and a modulator configured to modulate the light for wirelessly transmitting second data.

According to an exemplary embodiment of the second aspect of the present invention, the accessory device further comprises a Bluetooth transceiver, configured to wirelessly transmit and receive third data.

According to an exemplary embodiment of the second aspect of the present invention, the accessory device further comprises a user interface configured to provide one or more of the first data, the second data, and the third data.

According to an exemplary embodiment of the second aspect of the present invention, the accessory device comprises one or more of a charger stand, a cleaning stand, a docking station, a travel case, and a display.

These and other aspects of the present invention will become apparent from and be elucidated with reference to the embodiments described hereinafter.

### BRIEF DESCRIPTION OF THE DRAWINGS

These and other aspects of the invention will be apparent from and elucidated further with reference to the embodiments described by way of examples in the following description and with reference to the accompanying drawings, in which
FIG. 1A is a schematic diagram illustrating an exemplary personal care device.
FIG. 1B is a schematic diagram illustrating an exemplary accessory device.
FIG. 2A is a schematic diagram illustrating another exemplary personal care device.
FIG. 2B is a schematic diagram illustrating another exemplary accessory device.
FIG. 3A is a schematic diagram illustrating a further exemplary personal care device.
FIG. 3B is a schematic diagram illustrating a further exemplary accessory device.
FIG. 4A is a schematic diagram illustrating a further exemplary personal care device.
FIG. 4B is a schematic diagram illustrating a further exemplary accessory device.

It should be noted that the figures are purely diagrammatic and not drawn to scale. In the figures, elements which correspond to elements already described may have the same reference numerals. Examples, embodiments or optional features, whether indicated as non-limiting or not, are not to be understood as limiting the invention as claimed.

### DETAILED DESCRIPTION OF EMBODIMENTS

The present disclosure describes personal care devices and accessory devices for use with the personal care devices. Examples of personal care devices may include, but are not limited to, oral cleaning devices, hair care devices, hair removal devices, and skin care devices. Examples of the accessory devices may include, but are not limited to, a charger stand, a cleaning stand, a docking station, a travel case, and a display. The accessory device may provide various functions. For example, a charger stand may be used for charging a personal care device, e.g., an electric toothbrush. The charger stand for an electric toothbrush may also have an indicator or a display to provide personalized feedback showing where, how long, and with how much pressure a person brushes. A travel case may have a charging function to charge e.g., an electric toothbrush during travel.

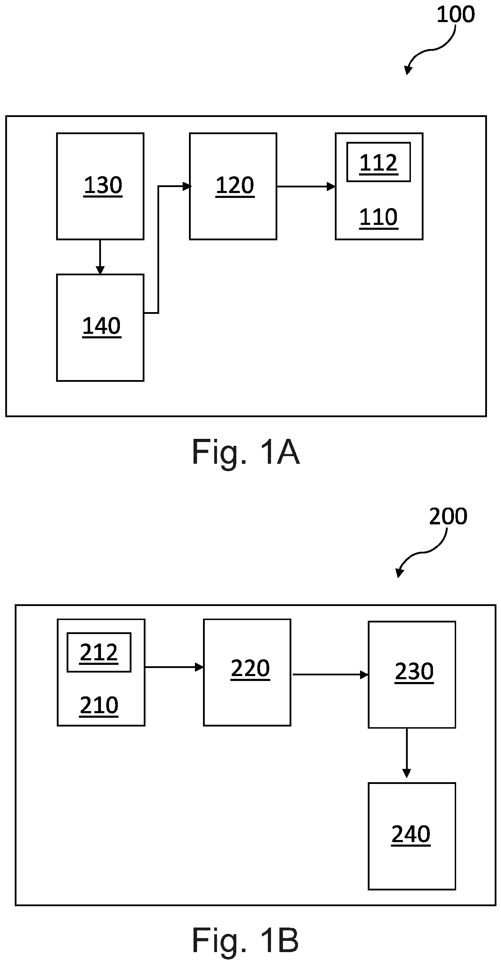

FIG. 1A illustrates an exemplary personal care device 100. The illustrated personal care device 100 may be an oral cleaning device, a hair care device, a hair removal device, or a skin care device. The personal care device 100 comprises an optical interface 110, a modulator 120, a sensor arrangement 130, and a controller 140.

The optical interface 110 comprises at least one light-emitting element 112 configured to emit light. Examples of the at least one light-emitting element 112 may include, but are not limited to, a laser diode (LD) and a light-emitting diode (LED). The at least one light-emitting element 12 may be configured to emit visible and/or infrared light. In some implementations, the at least one light-emitting element 112 may be configured to send optical signals in a narrow angle such that the optical beam travels directly without any reflection from the at least one light-emitting element 112 to a receiver. This approach of optical data transmission may minimize path loss and maximize power efficiency and the personal care device 100 using this approach can achieve higher transmission rates. In some implementations, the at least one light-emitting element 112 may be configured to send optical signals in a wide angle such that the optical signal can arrive at a receiver after one or several reflections. For example, the at least one light-emitting element 112 may comprise two or more light-emitting elements 112. The two or more light-emitting elements 12 may be arranged to emit the light in different directions, e.g., to achieve omnidirectionality. In such configuration, no alignment is required prior to use, and the personal care device 100 does not require a line-of-sight path for transmission.

The modulator 120 is configured to modulate the light for wirelessly transmitting first data. Various modulation schemes may be used for the modulator 20. Examples of the modulation schemes may include, but are not limited to, On-Off Keying (OOK), Pulse Modulation (PM), and Subcarrier Modulation (SCM). In OOK, a pulse is transmitted if the code bit is "one" during a fixed time slot and a "zero" is represented by the absence of the pulse during the time slot. In PM, a range of time-dependent features of a pulse carrier may be used to convey information. In SCM, when a bit stream modulates a single radio frequency, which is then further used to modulate optical carriers.

The sensor arrangement 130 comprises one or more sensors configured to capture sensor data, image data, and/or video data from a user of the personal care device. The first data transmitted by the optical interface 10 may include the captured sensor data, the captured image data, and/or the captured video data. Depending on the types of the personal care device, the sensor arrangement 130 may comprise different sensors. In one example, the personal care device is an oral care device, such as a toothbrush. In this example, the sensor arrangement 130 may comprise a pressure sensor that measures the pressure the user applies while brushing to protect the user's gums and teeth. The sensor arrangement 130 may additionally or alternatively comprise a camera that acquires image data and/or video data of the user's intra-oral cavity for e.g., plaque accumulation detection. In another example, the personal care device is a hair removal device. For example, the hair removal device is an Intense Pulsed Light (IPL) device. In this example, the sensor arrangement 130 may comprise a skin tone sensor for measuring a skin tone of the user.

The controller 140 is configured to control the operation of the personal care device 100. A "processor" is one example of the controller 140, which employs one or more microprocessors that may be programmed using software to perform various functions described herein. The controller 140 may be implemented with or without employing a processor, and also may be implemented as a combination of dedicated hardware to perform some functions and a processor (e.g., one or more programmed microprocessors and associated circuitry) to perform other functions. Examples of apparatus components that may be employed in various embodiments of the present disclosure include, but are not limited to, conventional microprocessors, application specific integrated circuits (ASICs), and field-programmable gate arrays (FPGAs). In various implementations, a processor may be associated with one or more storage media (generically referred to herein as "memory," e.g., volatile and non-volatile computer memory). In some implementations, the storage media may be encoded with one or more programs that, when executed on one or more processors and/or controllers, perform at least some of the functions described herein. Various storage media may be fixed within the computing device or may be transportable, such that the one or more programs stored thereon can be loaded into the computing device so as to implement various aspects of the present disclosure described herein. The terms "program" or "computer program" are used herein in a generic sense to refer to any type of computer code (e.g., software or microcode) that can be employed to program one or more processors. In the illustrated example, the modulator 120 and the controller 140 are shown separately. It will be appreciated that in some other examples, the modulator 120 may be embodied as, or in, the controller 140. For example, the modulator 130 may reside in the controller 140 as software.

FIG. 1B illustrates an exemplary accessory device 200. Examples of the accessory device 100 may include, but are not limited to, a charger stand, a cleaning stand, a docking station, a travel case, and a display. The accessory device 200 comprises an optical interface 210 and a demodulator 220. In the example shown in FIG. 1B, the accessory device may optionally comprise a controller 230, and a network interface 240.

The optical interface 210 comprises at least one photodetector 212 configured to detect light that is modulated for wirelessly transmitting first data. As described above, the first data may comprise sensor data, image data, and/or video data captured by the sensor arrangement 130 of the exemplary personal care device 100 shown in FIG. 1. Examples of the at least one photodetector 212 may include, but are not limited to, p-intrinsic-n (PIN) photo-diodes and avalanche photo-diodes (APDs). In some implementations, the at least one photodetector 212 may be configured to have a narrow field of view to achieve a higher level of directionality to receive optical signals. This may provide a direct path between the light-emitting element 112 of the personal care device 100 shown in FIG. 1A and the photodetector 212 of the accessory device 200 shown in FIG. 1B, thereby reducing multipath dispersion and enhancing the power efficiency of the optical communication link. In some other implementations, the at least one photodetector 212 may be configured to have a wide field of view to receive optical signals that are reflected from e.g., walls, ceiling, and other objects to provide robust links. For example, the at least one photodetector 212 may comprise two or more optical detectors to detect light from different directions, e.g., to achieve omnidirectionality. In some implementations, an optical filter may be included in the accessory device 200, and the optical filter may be tuned to the wavelength of the light emitted by the light-emitting element 112 of the personal care device 100.

The demodulator 220 is configured to extract the first data from the modulated light. In some implementations, the demodulator 220 may be embodied as a demodulator circuit. In some other implementations, the demodulator 220 may be embodied as, or in, the controller 230. For example, the demodulator 220 may reside in the controller 230 as a software.

The controller 230 may be configured to control an operation of the accessory device. The controller 230 may be employed in various embodiments of the present disclosure including, but are not limited to, conventional microprocessors, ASICs, and FPGAs.

The network interface 240 is configured to connect the accessory device 200 to a network. Examples of the network interface may include, but are not limited to, a Wi-Fi network interface, a Long-Term Evolution (LTE) network interface, a 5^{th} Generation New Radio (5G NR) network interface, and an Ethernet network.

FIG. 1A and FIG. 1B illustrate an exemplary personal care device 100 and an accessory device 200 that provide a uni-directional optical communication channel. In other words, the personal care device 100 shown in FIG. 1A is configured to transmit data to the exemplary accessory device 200 shown in FIG. 1B. In another example, the personal care device 100 and the accessory device 200 may be configured to establish a bi-directional optical communication channel.

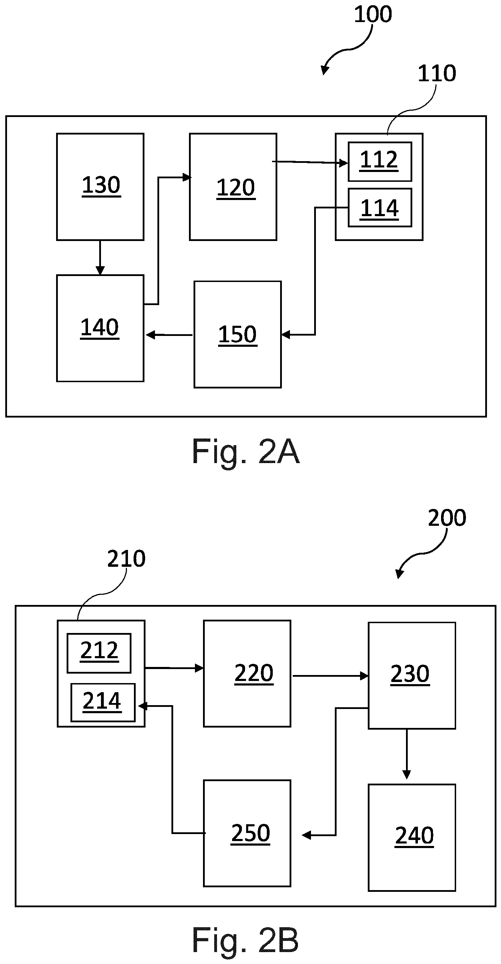

FIG. 2A and FIG. 2B illustrate a further example of the personal care device 100 and the accessory device 200 that are configured to provide a bi-directional optical communication channel. Compared to the exemplary personal care device 100 shown in FIG. 1A, the optical interface 110 in the exemplary care device 100 shown in FIG. 2A further comprises at least one photodetector 114 configured to detect light that is modulated for wirelessly transmitting second data. The second data may comprise configuration data usable for configuring the personal care device 100. For example, the accessory device 200 may be a base station that can send data towards a toothbrush handle related to brush intensity and drive train brush pattern, brushing duration intervals per jaw segment depending on the presence of more or less plaque or other detected issues such that the oral hygiene routine may be essentially adjusted and customized on the fly. Examples of the at least one photodetector 114 may include, but are not limited to, PIN photo-diodes and avalanche photo-diodes APDs. Depending on the link design, the at least one photodetector 114 may be configured to have a narrow field of view to achieve a higher level of directionality to receive optical signals or to have a wide field of view to receive optical signals that are reflected from e.g., walls, ceiling, and other objects to provide robust links. In some examples, the at least one photodetector 114 may comprise two or more photodetectors to detect light from different directions, e.g., to achieve omnidirectionality. Although not shown, the personal care device 100 may further comprise an optical filter tuned to the wavelength of the light emitted by the accessory device. Additionally, as shown in FIG. 2A, a demodulator 150 is also provided to extract the second data from the modulated light. In some implementations, the demodulator 150 may be embodied as a demodulator circuit. In some other implementations, the demodulator 150 may be embodied as, or in, the controller 140. For example, the demodulator 150 may reside in the controller 140 as a software.

As shown in FIG. 2B, the optical interface of the exemplary accessory device 200 further comprises at least one light-emitting element 214. Examples of the at least one light-emitting element 214 may include, but are not limited to, an LD and an LED. The at least one light-emitting element 214 may be configured to emit visible and/or infrared light. Depending on the link design, the at least one light-emitting element 214 may be configured to send optical signals in a narrow angle such that the optical beam travels directly without any reflection from the at least one light-emitting element 214 to the at least one photodetector 114 of the personal care device, or to send optical signals in a wide angle such that the optical signal can arrive at the receiver after one or several reflections. In some implementations, the at least one light-emitting element 214 may comprise two or more light-emitting elements 112 to emit the light in different direction, e.g., to achieve to achieve omnidirectionality.

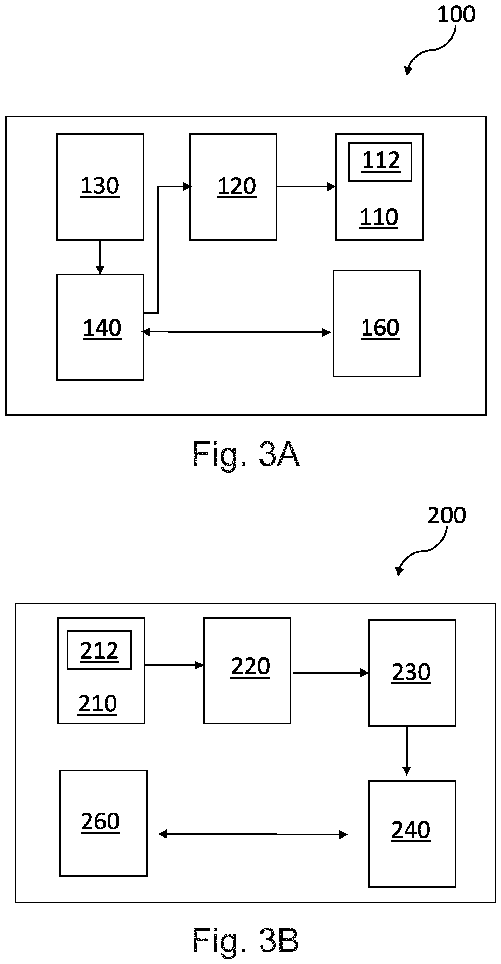

FIG. 3A and FIG. 3B illustrate a further example of the personal care device 100 and the accessory device 200. Compared to the personal care device 100 and the accessory device 200 shown in FIG. 1A and FIG. 1B, the personal care device 100 and the accessory device shown in FIG. 3A and FIG. 3B both comprise a Bluetooth transceiver 160, 260 configured to wirelessly transmit and receive third data. As an example, the third data may comprise information related to a setup of a light communication channel between the personal care device 100 and an accessory device 200. For example, the Bluetooth transceiver 160 of the personal care device 100 may send information related to the setup of the light communication channel towards an accessory device 200. In another example, the third data may comprise sensor data captured by one or more sensors of the personal care device. For example, if the personal care device is a toothbrush handle, information related to pressure that is being applied by the user while brushing his/her teeth may be transmitted from the toothbrush handle to e.g., a charging station. In this example, the recharge station may also include a display for the user to see simple messages. It will be appreciated that the Bluetooth transceiver may also be implemented in the personal care device 100 and the accessory device 200 shown in FIG. 2A and FIG. 2B.

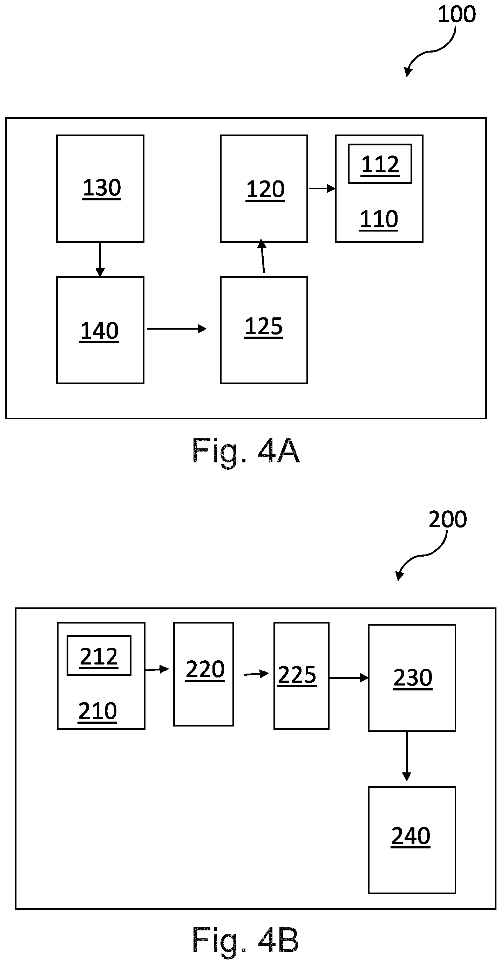

FIG. 4A and FIG. 4B illustrate a further example of the personal care device 100 and the accessory device 200. Compared with the personal care device 100 shown in FIG. 1A, the personal care device 100 shown in FIG. 4A further comprises a communication channel encoder 125 configured to encode the first data. The accessory device 200 shown in FIG. 4B further comprises a decoder 225 configured to decode the encoded first data. The channel encoding may introduce redundancy for the purpose of error detection and error correction on the receiving side. Potentially encryption of the data may also be added at the expense of increased data processing. In some implementations, the communication channel encoder 125 may be embodied as a communication channel encoder circuit. In some other implementations, the communication channel encoder 125 may reside in the controller 140 of the personal care device 100 as a software module. Similarly, the decoder 225 may be embodied as a decoder circuit, or may reside in the controller 230 of the accessory device 200 as a software module. It will be appreciated that the communication channel encoder 125 and the decoder 225 may also be implemented in the exemplary personal care devices 100 and the accessory devices 200 shown in FIG. 2A, FIG. 2B, FIG. 3A, and FIG. 3B.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium, such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

### LIST OF REFERENCE SIGNS:

- 100: personal care device
- 110: optical interface
- 112: light-emitting element
- 114: photodetector
- 120: modulator
- 125: encoder
- 130: sensor arrangement
- 140: controller
- 150: demodulator
- 160: Bluetooth transceiver
- 200: accessory device
- 210: optical interface
- 212: photodetector
- 214: light-emitting element
- 220: demodulator
- 225: decoder
- 230: controller
- 240: network interface
- 260: Bluetooth transceiver

## Claims

1. A personal care device (100), comprising:
- at least one light-emitting element (112) configured to emit light; and
- a modulator (120) configured to modulate the light for wirelessly transmitting first data.

2. The personal care device according to claim 1,
wherein the at least one light-emitting element comprises a plurality of light-emitting elements, at least two of which are configured to emit the light in different directions.

3. The personal care device according to claim 1 or 2, further comprising:
- a communication channel encoder (125) configured to encode the first data.

4. The personal care device according to any one of the preceding claims,
wherein the personal care device further comprises a sensor arrangement (140) with one or more sensors configured to capture sensor data, image data, and/or video data; and
wherein the first data comprises the captured sensor data, the captured image data, and/or the captured video data.

5. The personal care device according to any one of the preceding claims, further comprising:
- at least one photodetector (114) configured to detect light that is modulated for wirelessly transmitting second data; and
- a demodulator (150) configured to extract the second data from the modulated light.

6. The personal care device according to any one of the preceding claims, further comprising:
- a Bluetooth transceiver (160) configured to wirelessly transmit and receive third data.

7. The personal care device according to any one of the preceding claims,
wherein the personal care device comprises one or more of:
- an oral cleaning device;
- a hair care device;
- a hair removal device; and
- a skin care device.

8. An accessory device (200) for a personal care device, the accessory device comprising:
- at least one photodetector (212) configured to detect light that is modulated for wirelessly transmitting first data; and
- a demodulator (220) configured to extract the first data from the modulated light.

9. The accessory device according to claim 8,
wherein the at least one photodetector comprises a plurality of photodetectors, at least two of which are configured to detect light from different directions.

10. The accessory device according to claim 8 or 9,
wherein the first data comprises encoded data; and
wherein the accessory device further comprises a decoder (225) configured to decode the encoded data.

11. The accessory device according to any one of claims 8 to 10, further comprising:
- at least one light-emitting element (214) configured to emit light; and
- a modulator (250) configured to modulate the light for wirelessly transmitting second data.

12. The accessory device according to any one of claims 8 to 11, further comprising:
- a Bluetooth transceiver (260), configured to wirelessly transmit and receive third data.

13. The accessory device according to any one of claims 8 to 12, further comprising:
- a network interface (240) configured to connect the accessory device to a network.

14. The accessory device according to any one of claims 8 to 13, further comprising:
- a user interface configured to provide one or more of the first data, the second data, and the third data.

15. The accessory device according to any one of claims 8 to 14,
wherein the accessory device comprises one or more of:
- a charger stand;
- a cleaning stand;
- a docking station;
- a travel case; and
- a display.
